# EUROPÄISCHE PATENTANMELDUNG

(11) **EP 3 450 090 A1**
(43) Veröffentlichungstag der Anmeldung: **06.03.2019**
(21) Anmeldenummer: 18173010.2
(22) Anmeldetag: 17.05.2018
(51) Int. Cl.: B23Q 3/08, B25B 11/00, B23Q 1/28, B23Q 11/08, B23Q 1/38

(54) **LUFTKISSENTISCH**

(30) Priorität: 18.05.2017 DE 202017103007 U
(71) Anmelder: Wilhelm Altendorf GmbH & Co. KG, 32429 Minden (DE)
(72) Erfinder: Altendorf, Wilfried, 32429 Minden (DE)
(74) Vertreter: Eisenführ Speiser

(57) **Zusammenfassung**

Die Erfindung beschreibt eine Arbeitsplatte (100) für einen Luftkissentisch umfassend eine obere Auflagefläche mit einer Vielzahl von Luftaustrittsöffnungen (110), eine Vielzahl von Luftaustrittskanälen (120), wobei jeder Luftaustrittskanal (120) einen unterhalb der oberen Auflagefläche angeordneten Luftverteiler (200) mit einer Luftaustrittsöffnung (110) verbindet, eine Vielzahl von Düseneinsätzen (1), wobei jeder Düseneinsatz in dem Luftaustrittskanal (120) angeordnet ist und jeder Düseneinsatz umfasst einen Düsenkanal (21), der sich von einem Düseneingangsende zu einem Düsenausgangsende entlang einer Längsachse erstreckt und Luft in einer Strömungsrichtung aus dem Luftverteiler (200) zur oberen Auflagefläche leitet, einen zumindest teilweise innerhalb des Düsenkanals beweglich gelagerten Ventilkörper (10), wobei der Ventilkörper in einer geschlossenen Stellung den Düsenkanal verschließt, ein Betätigungselement (10) umfasst, das in der geschlossenen Stellung aus der oberen Auflagefläche hervorsteht und durch Beaufschlagen des Betätigungselements mit einer Öffnungskraft aus der geschlossenen Stellung in Richtung des Düseneingangsendes in eine offenen Stellung bewegbar ist.

## Beschreibung

Die Erfindung betrifft eine Arbeitsplatte für einen Luftkissentisch, umfassend eine obere Auflagefläche mit einer Vielzahl von Luftaustrittsöffnungen, eine Vielzahl von Luftaustrittskanälen.

Die Erfindung betrifft weiterhin eine Werkzeugmaschine mit einer Arbeitsplatte der eingangs genannten Art sowie einem Verfahren zur Herstellung einer Arbeitsplatte der eingangs genannten Art.

Eine Werkzeugmaschine im Sinne der Erfindung ist allgemein als eine Arbeitsmaschine zur Bearbeitung von Werkstücken aus Holz, Kunststoff, Metall und anderen Materialien zu verstehen. Derartige Werkzeugmaschinen besitzen zumindest eine Arbeitsplatte mit einer oberen Auflagefläche zum Positionieren eines Werkstücks. Oftmals müssen Werkstücke während eines Bearbeitungsvorgangs verschieblich gelagert werden oder aber auch fest fixiert werden, um eine maßgenaue Bearbeitung zu ermöglichen. Hierzu ist es meist vorteilhaft die Arbeitsplatte der Werkzeugmaschine als Luftkissentisch oder als Vakuumtisch auszubilden.

Luftkissentische werden dazu eingesetzt, um Werkstücke oder andere Gegenstände leicht verschieblich zu lagern. Das Funktionsprinzip derartiger Luftkissentische beruht hierbei darauf, dass zumindest eine Luftzuführöffnung mit einer Druckluftquelle verbunden ist, die einen Volumenfluss an Luft bereitstellt, welcher an eine Vielzahl von Luftaustrittsöffnungen verteilt wird und dort nach oben aus den Luftaustrittsöffnungen austreten kann. Auf diese Weise kann ein Werkstück, welches oberhalb der Luftaustrittsöffnungen platziert wird aufgrund des Austritts der Luft angehoben werden. Das Werkstück schwebt dann auf einem Luftpolster und kann in einfacher Weise oberhalb der Auflagefläche in horizontaler Richtung verschoben werden. Darüber hinaus kann die Arbeitsplatte der Werkzeugmaschine auch als Vakuumtisch ausgebildet sein, um flächige Werkstücke auf der Arbeitsplatte fixieren zu können. Hierbei ist zumindest eine Luftabführöffnung mit einer Vakuumquelle verbunden, welche an einer Vielzahl von Lufteintrittsöffnungen einer oberen Auflagefläche der Arbeitsplatte ein Vakuum erzeugt. Alternativ können Arbeitsplatten auch die mit der Druckluftquelle verbundene Luftzufuhröffnung und die mit der Vakuumquelle verbundene Luftabführöffnung umfassen und somit nach Bedarf als Luftkissentisch oder Vakuumtisch fungieren. Hierbei kann die Luftaustrittsöffnung zugleich als Lufteintrittsöffnung, der Luftaustrittskanal zugleich als Lufteintrittskanal und der Luftverteiler zugleich als Vakuumverteiler ausgebildet sein.

Ein Problem, welches bei Luftkissentischen und Vakuumtischen auftritt, hat darin seine Ursache, dass bei der Bearbeitung von Werkstücken Verschmutzungen, wie beispielsweise Späne oder andere, bei der Bearbeitung von Werkstücken entstehende Partikel in die Luftaustrittsöffnungen bzw. die Lufteintrittsöffnungen gelangen und hierdurch luftführende Bereiche verschmutzen oder verstopfen. Insbesondere der Einsatz des Luftkissentischs oder des Vakuumtischs an einer Werkzeugmaschine mit erheblichen Wartungs- und Reinigungsarbeiten verbunden. Darüber hinaus sind die Luftaustrittsöffnungen bzw. Lufteintrittsöffnungen meist auf der gesamten oberen Auflagefläche der Arbeitsplatte verteilt, um die Funktion auch für große und schwere Werkstücke gewährleisten zu können. Nachteilig daran ist, dass bei einer Bearbeitung eines kleineren Werkstücks, das nur über einigen wenigen Luftaustrittsöffnungen bzw. Lufteintrittsöffnungen angeordnet ist, ein großer Teil der Druckluft oder des Vakuums durch sämtliche weitere Luftaustrittsöffnungen bzw. Lufteintrittsöffnungen verloren geht. Insbesondere dann, wenn dieses Werkstück trotz der geringen Größe eine erhebliche Flächenlast aufweist, kann beispielsweise die Druckluft nicht ausreichen, um das Werkstück verschieblich zu lagern.

Gemäß dem Stand der Technik wird bei Luftkissentischen ein Ventil in die Luftaustrittsöffnung eingesetzt, welches durch Eindrücken eines Stiftes, der über die obere Auflagefläche hinausragt, geöffnet wird. Folglich wird durch Eindrücken dieses Stiftes ein Luftaustritt aus der Luftaustrittsöffnung ermöglicht. Aus DE19608798A1 ist ein Tastventil vorbekannt, das zur Vakuumspannung von Werkstücken an einem Spannbalken dient.

Das Tastventil ist in eine Ausnehmung eingesetzt, die mit einem parallel zur Spannfläche des Spannbalkens verlaufenden Vakuumkanal in Verbindung steht. Ein die Spannfläche überragender Anteil des Tastventils kann elastisch verformt und das Tastventil hierdurch in eine Offenlage gedrückt werden, in der ein Unterdruck einen auf dem Tastventil aufliegenden Gegenstand ansaugt. Das Tastventil ist mittels eines Sicherungsrings in der Ausnehmung gesichert. Aus DE29613784U1 ist ein weiteres Spannventil vorbekannt, das ebenfalls eine Kugel als Ventilkörper in einer Stufenbohrung aufweist. Solche als Spanneinrichtungen eingesetzte Ventilbauarten unterscheiden sich von den für einen Luftkissentisch eingesetzten Ventilen funktionell dadurch, dass einerseits die Dichtwirkung durch eine Anpresskraft einer Feder erzeugt werden muss, was eine besondere Ausführung und Präzision des Ventildichtsitzes erfordert. Der Ventildichtsitz erweitert sich in Strömungsrichtung der angesaugten Luft bei geöffnetem Ventil und kann dadurch einen sichere Ventildichtigkeit herstellen. Zugleich besteht durch diese Erweiterung nicht die Gefahr, dass sich Späne oder dergleichen im Bereich des Ventilsitzes verfangen und diesen blockieren, da die größte Luftströmungsgeschwindigkeit und der kleinste Durchtrittsquerschnitt im Bereich des Ventilsitzes liegt, sich der Strömungsquerschnitt hinter dem Ventilsitz erweitert und hierdurch alle Partikel, die den Ventilsitz passieren können, sicher weiter abgesaugt werden können, alle anderen Partikel aber im Strömungsweg vor dem Ventilsitz auf der Spannoberfläche liegen bleiben und leicht entfernt werden können.

Aus DE10023323A1 ist eine Spannvorrichtung bekannt, bei der die Kugel gekapselt durch eine Membran ist.

Aus EP1837141A2 ist eine druckluftbeaufschlagte Trageinrichtung bekannt, bei der ein Adapterstück in eine Aufnahmeöffnung so eingesetzt ist, dass es bündig zur Oberfläche eines Entnahmetisches liegt. In dem Adapterstück ist eine Ausnehmung und in der Ausnehmung ist einer Kugel als Ventilkörper eingesetzt, die eine Luftaustrittsöffnung versperrt. Hierdurch kann ein Werkstück, welches oberhalb dieser Luftaustrittsöffnung platziert wird, die Kugeln aller unterhalb des Werkstücks liegenden Ventile eindrücken und aufgrund des Austritts der Luft aus den so entsprechend geöffneten Luftaustrittsöffnungen angehoben werden. Die Ventile aller weiteren Luftaustrittsöffnungen seitlich des Werkstücks bleiben verschlossen.

Nachteilig an dieser Ausgestaltung ist jedoch, dass derartige Ventile empfindlich gegenüber Verschmutzungen sind und häufig mit der Zeit verschmutzen und dadurch in ihrer Funktion beeinträchtigt sind. Ein Reinigen derartiger Ventile ist mit einem erheblichen Arbeitsaufwand verbunden, da die Verschmutzungen innerhalb des Ventilinnenraums liegen und den Ventilsitz so verstopfen oder teilverstopfen können, dass die Dichtigkeit des Ventilsitzes beeinträchtigt ist. Ferner können besonders hartnäckige Verschmutzungen oftmals nicht komplett entfernt werden oder auch das Ventil beschädigen.

Es ist daher die Aufgabe der Erfindung eine Lösung für einen Luftkissentisch bereitzustellen, mit der ein zuverlässiges Anheben von sowohl kleinen als auch großen Werkstücken auch in schmutzbelasteten Umgebungen mit geringerem Wartungsaufwand als im Stand der Technik ermöglicht wird.

Gemäß einem ersten Aspekt der vorliegenden Erfindung wird die eingangs genannte Aufgabe gelöst durch eine Arbeitsplatte für einen Luftkissentisch, umfassend
- eine obere Auflagefläche mit einer Vielzahl von Luftaustrittsöffnungen,
- eine Vielzahl von Luftaustrittskanälen, wobei jeder Luftaustrittskanal einen unterhalb der oberen Auflagefläche angeordneten Luftverteiler mit einer Luftaustrittsöffnung verbindet,
- eine Vielzahl von Düseneinsätzen, wobei jeder Düseneinsatz in dem Luftaustrittskanal angeordnet ist und jeder Düseneinsatz umfasst:
   ∘ einen Düsenkanal, der sich von einem Düseneingangsende zu einem Düsenausgangsende entlang einer Längsachse erstreckt und Luft in einer Strömungsrichtung aus dem Luftverteiler zur oberen Auflagefläche leitet,
   ∘ einen zumindest teilweise innerhalb des Düsenkanals beweglich gelagerten Ventilkörper, wobei der Ventilkörper
      ▪ in einer geschlossenen Stellung den Düsenkanal verschließt,
      ▪ ein Betätigungselement umfasst, das in der geschlossenen Stellung aus der oberen Auflagefläche hervorsteht und
durch Beaufschlagen des Betätigungselements mit einer Öffnungskraft aus der geschlossenen Stellung in Richtung des Düseneingangsendes in eine offenen Stellung bewegbar ist, wobei der Düseneinsatz in dem Luftaustrittskanal lösbar eingesetzt und in Richtung der oberen Auflagefläche herausnehmbar in dem Luftaustrittskanal befestigt ist.

Der Erfindung liegt die Erkenntnis zugrunde, dass bei der Bearbeitung von Werkstücken Verschmutzungen, wie beispielsweise Späne oder andere, bei der Bearbeitung von Werkstücken entstehende Partikel, entstehen und dadurch luftführende Bereiche verschmutzen oder sogar verstopfen. Unter einem luftführenden Bereich ist ein, für einen Luftkissentisch maßgeblicher Bereich zu verstehen, durch welchen die Luft hindurch geführt wird. Zu den luftführenden Bereichen zählen zumindest die Luftaustrittsöffnungen, die Luftaustrittskanäle, Öffnungen von Kanälen des Luftverteilers, der Luftverteiler selbst oder auch der Düsenkanal. Darüber hinaus wurde erkannt, dass ein Ventil umfassend zumindest einen Düsenkanal und einen darin angeordneten Ventilkörper, die luftführenden Bereiche weitestgehend vor Eintreten von Verschmutzungen und daraus folgende Verstopfungen schützen kann. Da die Ventile bei der Bearbeitung der Werkstücke geöffnet sind, kann hierbei eine Verschmutzung der Ventile selbst nicht verhindert werden. Aus diesem Grund ist eine Verschmutzung der Ventile und damit eine Beeinträchtigung der Funktionsfähigkeit oder sogar eine Beschädigung der Ventile zu erwarten. Infolgedessen wurde erkannt, dass es vorteilhaft ist, ein Ventil umfassend einen Düseneinsatz und einen darin angeordneten Ventilkörper bereitzustellen, welches in dem Luftaustrittskanal lösbar eingesetzt und herausnehmbar befestigt ist. Insbesondere aufgrund der Beeinträchtigung der Funktionsfähigkeit des Ventils wurde erkannt, dass es weiter vorteilhaft ist, eine Wegwerflösung bereitzustellen, um aufwendige Wartungs- und Reinigungsarbeiten vermeiden zu können. Da bereits nach einigen wenigen Bearbeitungsvorgängen mit Verschmutzungen, Verstopfungen oder Beschädigungen zu rechnen ist, kann der erfindungsgemäße Düseneinsatz oder zumindest ein Düsenkörper, welcher den Düsenkanal ausbildet, aus Kunststoff ausgebildet sein. Insbesondere bevorzugt kann der Düseneinsatz oder zumindest der Düsenkörper ein Spritzgussteil sein. Aufgrund der Verschmutzung nach einigen wenigen Bearbeitungsvorgängen und der daraus resultierenden Notwendigkeit des Austauschens des Düseneinsatzes, ist zumindest in dieser Zeit mit einem Verschleiß des Materials nicht zu rechnen. Aus diesem Grund kann ein einfach und insbesondere kostengünstig hergestellter Düseneinsatz bereitgestellt werden.

Unter der oberen Auflagefläche ist eine im Wesentlichen horizontal ausgerichtete Werkstückauflagefläche zu verstehen, welche eine vollständig ebene Oberfläche sein kann oder aber auch Transporthilfselemente, wie beispielsweise Luftaustrittsöffnungen, oder Fixierhilfselemente, wie beispielsweise Lufteintrittsöffnungen, umfassen kann. Derartige Werkstückauflageflächen dienen dazu, das Werkstück beispielsweise relativ zu einem Sägewerkzeug, zu positionieren, um eine maßgenaue Bearbeitung zu ermöglichen. Die erfindungsgemäßen Luftaustrittskanäle erstrecken sich vorzugsweise senkrecht zur oberen Auflagefläche und verbinden die Luftaustrittsöffnungen der oberen Auflagefläche und den unterhalb der oberen Auflagefläche angeordneten Luftverteiler bzw. dessen Öffnungen mit Kanälen. Folglich ist unter der Luftaustrittsöffnung eine Öffnung, vorzugsweise eine kreisrunde Öffnung, in der oberen Auflagefläche zu verstehen, aus welcher, bei Aktivieren einer Druckluftquelle, welche über den Luftverteiler und dessen Kanäle bzw. deren Öffnungen mit dem Luftaustrittskanal verbunden ist, Luft ausströmt. Durch Aktivieren der Druckluftquelle strömt ein Volumenfluss an vorzugsweise komprimierter Luft durch den Luftverteiler und aus dessen Öffnungen der Kanäle des Luftverteilers, welche in den Luftaustrittskanälen der Arbeitsplatte angeordnet sind. Hierdurch kann der Volumenfluss an die Vielzahl von Luftaustrittskanälen verteilt werden, durch diese strömen und nach oben aus den Luftaustrittsöffnungen austreten. Folglich ist das Werkstück auf den Luftaustrittsöffnungen anzuordnen, um dieses verschieblich zu lagern.

Der erfindungsgemäße Düseneinsatz ist in den Luftaustrittskanal lösbar eingesetzt und herausnehmbar befestigt und dadurch vorzugsweise zumindest teilweise flächenbündig in der oberen Auflagefläche integriert. Der Düseneinsatz und der darin ausgebildete Düsenkanal erstrecken sich senkrecht zu der oberen Auflagefläche. Unter einem Düsenkanal ist ein vorzugsweise röhrenförmiger Verbindungsdurchgang durch den Düseneinsatz zu verstehen, durch den Luft in Strömungsrichtung aus dem Luftaustrittskanal zur oberen Auflagefläche strömt. Folglich ist unter dem Düseneingangsende ein erstes Ende des Düsenkanals zu verstehen, in das die Luft aus dem Luftaustrittskanal in den Düsenkanal einströmt. Analog dazu ist unter dem Düsenausgangsende ein zweites Ende des Düsenkanals zu verstehen, aus dem die Luft aus dem Düsenkanal austritt.

Erfindungsgemäß beschreibt der Düsenkanal mit dem darin beweglich gelagerten Ventilkörper ein Ventil, das ausgebildet ist, um den Durchfluss von Luft abzusperren bzw. zu regeln. Hierbei ist unter dem Ventilkörper ein Verschlussteil zu verstehen, welches im Wesentlichen parallel zur Strömungsrichtung der Luft bewegt wird den Durchfluss der Luft in der geschlossenen Stellung absperrt. Vorzugsweise kann der Ventilkörper das Düsenausgangsende des Düsenkanals absperren. Der Ventilkörper kann vorzugsweise als ein Kegel oder eine Kugel ausgebildet sein und ist zumindest teilweise innerhalb des Düsenkanals beweglich gelagert. Hierbei steht erfindungsgemäß, insbesondere in der geschlossenen Stellung, ein Teil des Ventilkörpers aus der oberen Auflagefläche hervor, wobei dieser Teil als das Betätigungselement ausgebildet ist. Folglich ist das Betätigungselement als ein Teil des Ventilkörpers zu verstehen, wobei zumindest dieses Betätigungselement in der geschlossenen Stellung aus der oberen Auflagefläche und demzufolge auch aus dem Düsenkanal hervorsteht. Erfindungsgemäß wird durch Anordnen des Werkstücks auf der oberen Auflagefläche das Betätigungselement mit der Öffnungskraft, also einer Gewichtskraft des Werkstücks, von oben in Richtung der oberen Auflagefläche beaufschlagt. Dadurch kann der Ventilkörper von der geschlossenen Stellung weiter in den Düsenkanal hineingeschoben werden und hierdurch den Düsenkanal in der offenen Stellung zumindest teilweise freigeben, um einen Luftaustritt aus der Luftaustrittsöffnung zu ermöglichen. In der offenen Stellung kann der Ventilkörper aus der oberen Auflagefläche hervorstehen oder so weit in den Düsenkanal eingeschoben werden, dass dieser vorzugsweise flächenbündig in der oberen Auflagefläche integriert ist. Hierdurch kann das Werkstück entweder flächig auf der oberen Auflagefläche aufliegen oder punktuell auf den Betätigungselementen der Ventilkörper gelagert sein, bis die Druckluftquelle aktiviert und dadurch ein Luftpolster zur verschieblichen Lagerung erzeugt wird.

Erfindungsgemäß ist der Düseneinsatz von oben in den Luftaustrittskanal lösbar eingesetzt und derart befestigt, dass dieser in Richtung der oberen Auflagefläche herausnehmbar ist. Dies ermöglicht ein einfaches Einsetzen und Befestigen sowie Lösen der Befestigung und herausnehmen des Düseneinsatzes aus dem Luftaustrittskanal. Hierdurch kann der Düseneinsatz bei Verschmutzungen, Verstopfungen oder Beschädigung aus dem Luftaustrittskanal herausgenommen und ausgetauscht werden. Hierdurch können sämtliche, vorstehend aufgeführte Nachteile beseitigt und eine schnelle Austauschbarkeit des Düseneinsatzes gewährleistet werden.

In einer besonders bevorzugten Ausführungsvariante der Arbeitsplatte ist vorgesehen, dass der Düseneinsatz in dem Luftaustrittskanal verrastet ist. Hierfür ist es erforderlich, dass der Luftaustrittskanal wenigstens ein Rastelement zur Verbindung mit dem Düseneinsatz aufweist. Der Düseneinsatz weist demnach ein korrespondierendes Rastelement auf, um in einer Verrastposition den Düseneinsatz in dem Luftaustrittskanal zu verrasten und gegen ungewolltes Herausnehmen zu sichern. Die Verrastposition beschreibt demnach eine Position, in welcher der Düseneinsatz in dem Luftaustrittskanal befestigt ist. Vorzugsweise sind die Rastelement nachgiebig zu gestalten, um die Verrastung zu ermöglichen. Weiter bevorzugt kann das Rastelement als eine Querschnittsveränderung des Düseneinsatzes ausgebildet sein. Darüber hinaus können beispielsweise Rasthaken vorgesehen sein, um die Verrastung zu ermöglichen.

Eine derartige Verrastung ermöglicht ein besonders einfaches Einsetzen und ein Herausnehmen des Düseneinsatzes aus dem Luftaustrittskanal. Hierbei sind keine aufwendigen Arbeitsschritte oder diverse Werkzeuge notwendig. Durch den Einrastmechanismus kann der Düseneinsatz auch bei einströmender Druckluft nicht angehoben werden. Alternativ hierzu kann der Düseneinsatz auch mittels einer Übermaßpassung in dem Luftaustrittskanal befestigt werden.

Gemäß einer weiter bevorzugten Ausführungsvariante ist vorgesehen, dass der Düseneinsatz ein Gehäuse umfasst, wobei der Düsenkanal in dem Gehäuse angeordnet oder ausgebildet ist und das Gehäuse vorzugsweise ein Kunststoffelement ist. Unter dem Gehäuse des Düseneinsatzes ist vorzugsweise ein zylindrisch ausgebildeter Düsenkörper, der einen im Wesentlichen rotationssymmetrischen Innenraum umschließt, in welchem der Düsenkanal ausgebildet oder angeordnet ist, zu verstehen. Vorzugsweise weist das Gehäuse zumindest ein Rastelement auf, um das Gehäuse und dadurch den Düseneinsatz in dem Luftaustrittskanal zu verrasten. Weiter bevorzugt ist es, dass das Gehäuse ein Kunststoffelement und insbesondere ein Spritzgussteil ist, um dieses einfach und kostengünstig herstellen zu können. Dadurch wird eine Wegwerflösung des Düseneinsatzes bereitgestellt, der nach Verschmutzung oder Verstopfung aus dem Luftaustrittskanal herausgenommen und ersetzt werden kann.

Eine weiter bevorzugte Fortbildung der Arbeitsplatte zeichnet sich dadurch aus, dass der Düseneinsatz lösbar in eine in dem Luftaustrittskanal befestigte Hülse eingesetzt ist, wobei der Düseneinsatz aus der Hülse in Richtung der oberen Auflagefläche herausnehmbar befestigt ist, vorzugsweise verrastet ist und weiter vorzugsweise die Hülse aus einem Material ausgebildet ist, das eine höhere Festigkeit aufweist als das Material, aus dem der Düseneinsatz ausgebildet ist. Gemäß dieser Fortbildung ist der Düseneinsatz in einer Hülse befestigt, beispielsweise durch Verrastung. Der Düseneinsatz ist dabei in dem Bereich, in dem die Befestigungskraft der Befestigung bewirkt wird, aus einem Material ausgebildet, das eine geringere Festigkeit aufweist als das Material der Hülse in dem korrespondierenden Befestigungsbereich der Hülse. Hierdurch wird sichergestellt, dass zwar der Düseneinsatz, nicht jedoch die Hülse in dem Befestigungsbereich beschädigt wird, wenn die Befestigung gelöst wird, beispielsweise indem die Verrastung herausgehebelt wird. Dies ermöglicht eine erneute Befestigung wie eine Verrastung eines neuen Düseneinsatzes in der selben Hülse. Der Düseneinsatz kann ein Gehäuse vorzugsweise aus Kunststoff aufweisen, die Hülse in dem Luftaustrittskanal befestigt ist, kann aus einem metallischen Werkstoff oder einem Kunststoff hergestellt sein, der eine höhere Festigkeit als der Kunststoff des Düseneinsatzes aufweist.

Die Hülse kann zylindrisch ausgebildet sein und einen im Wesentlichen rotationssymmetrischen Innenraum zur Aufnahme des Gehäuses des Düseneinsatzes aufweisen. Hierbei kann ein Rastelement im Innenraum der Hülse ausgebildet sein, das mit einem korrespondierenden Rastelement des Gehäuses verrastbar ist. Besonders bevorzugt ist das Rastelement im Innenraum der Hülse als eine Querschnittsveränderung des Innenraums ausgebildet und mit einer Querschnittsveränderung des Gehäuses in Eingriff bringbar.

Durch diese Ausgestaltung ist das Gehäuse umfassend den Düsenkanal lösbar in der Hülse eingesetzt und herausnehmbar befestigt.

Bei einer Verschmutzung des Düsenkanals kann vorliegend das Gehäuse aus der Hülse herausgenommen und ausgetauscht werden.

Dabei ist es besonders bevorzugt, wenn die Befestigung der Hülse in dem Luftaustrittskanal eine erste Haltekraft der Hülse innerhalb des Luftaustrittskanal in Richtung der Längsachse aufweist, die höher ist als eine zweite Haltekraft, die durch die Befestigung des Düseneinsatzes in der Hülse entlang der Längsachse erzeugt wird. Durch diese Fortbildung wird sichergestellt, dass die Hülse bei Herausnehmen des Düseneinsatzes in der Arbeitsplatte verbleibt und folglich schnell und sicher der Düseneinsatz ausgetauscht werden kann. Weiterhin wird sichergestellt, dass bei Einsetzen und Befestigen eines neuen Düseneinsatzes die Hülse nicht innerhalb der Luftaustrittsöffnung sich verschiebt, beispielsweise ungewollt nach unten in Richtung des Luftverteilers durchrutscht.

In einer weiteren bevorzugten Ausführungsvariante der Arbeitsplatte ist vorgesehen, dass der Düseneinsatz ein Federelement umfasst, welches sich zumindest von dem Düseneingangsende bis zu dem Ventilkörper erstreckt, wobei
- das Federelement im Bereich des Düseneingangsendes abgestützt ist und
- der Ventilkörper auf dem Federelement angeordnet ist und
weiter dadurch gekennzeichnet, dass das Federelement eine Federkraft auf den Ventilkörper in Richtung der geschlossenen Stellung ausübt.

Der Ventilkörper ist auf dem Federelement, welches vorzugsweise einen Durchmesser aufweist, der kleiner ist als ein maximaler Durchmesser des Ventilkörpers, angeordnet. Hierdurch ist das Federelement beweglich gelagert. Vorzugsweise kann der Düsenkanal einen Innendurchmesser aufweisen, welcher größer ist als der Durchmesser des Federelements ist, sodass das Federelement im Düsenkanal beweglich ist. Das Federelement kann derart vorgespannt sein, dass selbst bei einer Positionierung eines Werkstücks, welches nur eine geringe Flächenlast aufweist, diese Flächenlast ausreicht, um den Ventilkörper gegeb die Federkraft zumindest teilweise in den Düsenkanal zu bewegen und hierdurch den Luftdurchtritt durch Düsenkanal zumindest teilweise freizugeben. Ferner kann durch die Federelemente eine gleichmäßige Lastverteilung auch bei einer Positionierung eines Werkstücks mit unebener Fläche ermöglicht werden.

Eine weitere bevorzugte Fortbildung der Arbeitsplatte zeichnet sich dadurch aus, dass der Ventilkörper als ein Kugelrollenelement mit einem Kugeldurchmesser ausgebildet ist, wobei der Düsenkanal vorzugsweise einen Ventilsitzabschnitt mit einem inneren Durchmesser aufweist, welcher kleiner ist als der Kugeldurchmesser. Hierdurch kann der Ventilkörper im Wesentlichen innerhalb des Düsenkanals beweglich angeordnet sein, ohne aus dem Düsenkanal nach oben entfernt werden zu können. Durch die Anordnung des Federelements innerhalb des Düsenkanals und der Abstützung des Kugelrollenelements auf dem Federelement kann das Kugelrollenelement in der geschlossenen Position gegen den Ventilsitzabschnitt in Richtung zum Düsenausgangsende gedrückt werden, den Düsenkanal hierdurch verschließen und zumindest in der geschlossenen Position aus dem Düsenausgangsende hervorstehen.

Darüber hinaus ist es bevorzugt, ein Teil des Kugelrollenelements in der offenen Stellung aus der oberen Auflagefläche hervorsteht. Durch eine derartige Kugellagerung wird eine gleichmäßige Lastverteilung bei der Positionierung und insbesondere bei einer Bewegung des Werkstücks auf der oberen Auflagefläche gewährleistet, selbst wenn das Werkstück eine unebene Lauffläche aufweist. Die vorstehend genannte Öffnungskraft, also die Flächenlast bzw. die Gewichtskraft des Werkstücks kann das Kugelrollenelement vollständig oder teilweise in den Düsenkanal verschieben. Hierzu kann die Vorspannung und die Federkonstante des Federelements entsprechend ausgebildet sein.

Eine weitere bevorzugte Fortbildung der Arbeitsplatte zeichnet sich dadurch aus, dass die Arbeitsplatte als Luftkissentisch oder als Vakuumtisch ausgebildet ist, wobei bei der Ausbildung als Vakuumtisch
- die Vielzahl von Luftaustrittsöffnungen als eine Vielzahl von Lufteintrittsöffnungen ausgebildet sind,
- der Luftverteiler als ein Vakuumverteiler ausgebildet ist und
- der Luftaustrittskanal als ein Vakuumleitungskanal ausgebildet ist,
wobei der Düsenkanal Luft in einer der Strömungsrichtung entgegengesetzten zweiten Strömungsrichtung von der oberen Auflagefläche in den Vakuumverteiler leitet.

Der Erfindung liegt der Gedanke zugrunde, eine Arbeitsplatte bereitzustellen, welche ein lösbares Einsetzen und ein herausnehmbares Befestigen eines Düseneinsatzes ermöglicht, wobei diese Arbeitsplatte sowohl in einen Vakuumtisch als auch in einen Luftkissentisch integriert werden soll. Die Ausgestaltung der Arbeitsplatte für einen Luftkissentisch kann identisch zu der Ausgestaltung der Arbeitsplatte für einen Vakuumtisch ausgeführt sein, insbesondere kann durch Aufbringen eines Unterdrucks anstelle eines Überdrucks auf den Düsenkanal eine Fixierung eines Werkstücks auf der Arbeitsplatte erreicht werden.

In einer weiteren bevorzugten Ausführungsvariante der Arbeitsplatte ist vorgesehen, dass der Düseneinsatz ein Befestigungsmittel umfasst, das mit einem in dem Luftaustrittskanal ausgebildeten Befestigungsaufnahmemittel zusammenwirkt und eine lösbare Verbindung ausbildet und diese lösbare Verbindung durch Einführen eines Stabelements in den Düsenkanal und Aufbringen einer Hebelkraft auf den Düseneinsatz durch Verschwenken des Stabelements um eine senkrecht zur Längsachse ausgerichtete Hebelachse lösbar ist ohne die Befestigungsaufnahmemittel zu beschädigen. Dieser bevorzugten Ausführungsvariante liegt der Gedanke zugrunde, den Düseneinsatz schnell, also ohne aufwendige Arbeitsschritte, und ohne ein spezielles Werkzeug, beispielsweise nur mit einem Schraubenzieher oder einem anderen Stabelement, aus dem Luftaustrittskanal herauszuhebeln. Hierzu kann das Stabelement den Ventilkörper in Richtung der offenen Position drücken und so senkrecht von oben in den Düsenkanal eingeführt werden. Ein ausreichender Spielraum unterhalb des Ventilkörpers, der größer ist als die Höhe des Ventilkörpers entlang der Längsachse, gewährleistet eine ausreichende Einführ-Tiefe des Stabelements in den Düsenkanal und so einen sicheren Halt bei Aufbringen der Hebelkraft. Durch das Verschwenken des Stabelements um die senkrecht zur Längsachse ausgerichtete Hebelachse kann die notwenige Hebelkraft aufgebracht werden, um den Düseneinsatz aus dem Luftaustrittskanal herausnehmen zu können.

Unter einem Befestigungsmittel kann vorzugsweise ein Formschlusselement verstanden werden. Analog dazu kann unter einem Befestigungsaufnahmemittel ein korrespondierendes Formschlusselement verstanden werden. Das Befestigungsaufnahmemittel ist insbesondere derart ausgebildet, dass es durch ein Raushebeln des Düseneinsatzes nicht beschädigt werden kann. Hierbei ist es unerheblich, ob bei dieser Hebelbewegung der Düseneinsatz oder ein Teil des Düseneinsatzes, insbesondere das Befestigungsmittel, beschädigt wird, da der Düseneinsatz als Wegwerflösung ausgebildet ist.

Gemäß einem weiteren Aspekt der vorliegenden Erfindung wird die eingangs genannte Aufgabe gelöst durch einen Düseneinsatz zum Einsetzen und Befestigen in einem Luftaustrittskanal einer Arbeitsplatte, umfassend
- zumindest einen Düsenkanal, der sich von einem Düseneingangsende zu einem Düsenausgangsende erstreckt und Luft in einer Strömungsrichtung von dem Düseneingangsende zum Düsenausgangsende leitet,
- einen im Wesentlichen innerhalb des Düsenkanals beweglich gelagerten Ventilkörper, wobei der Ventilkörper
   ∘ in einer geschlossenen Stellung den Düsenkanal im Bereich des Düsenausgangsendes verschließt,
   ∘ ein Betätigungselement umfasst, das in der geschlossenen Stellung aus dem Düsenausgangsende hervorsteht und
   ∘ durch Beaufschlagen des Betätigungselements mit einer Öffnungskraft, die in Richtung des Düsenausgangsendes wirkt, aus der geschlossenen Stellung in Richtung des Düseneingangsendes in eine offenen Stellung bewegbar ist,
wobei der Düseneinsatz ein Befestigungsmittel umfasst, das ausgebildet ist, um den Düseneinsatz lösbar in dem Luftaustrittskanal und in Richtung einer oberen Auflagefläche herausnehmbar zu befestigen, vorzugsweise zu verrasten.

Es soll verstanden werden, dass der Düseneinsatz gemäß dem ersten Aspekt der Erfindung, der die Arbeitsplatte samt dem Düseneinsatz umfasst, gleiche oder ähnliche Aspekte umfasst, wie sie insbesondere in den Unteransprüchen und den vorstehend beschriebenen bevorzugten Ausführungsformen zum ersten Aspekt definiert sind. Bezüglich der bevorzugten Ausführungsformen des Düseneinsatzes gemäß diesem Aspekt der Erfindung sowie deren Vorteile wird auf die weiter oben beschriebenen bevorzugten Ausführungsformen vollumfänglich Bezug genommen.

Gemäß einem weiteren Aspekt der vorliegenden Erfindung wird die eingangs genannte Aufgabe gelöst durch eine Werkzeugmaschine mit einem Luftkissentisch zur verschieblichen Lagerung flächiger Werkstücke und/oder ggf. einem Vakuumtisch zur Fixierung flächiger Werkstücke, umfassend eine Arbeitsplatte mit einem Düseneinsatz der vorstehend genannten Art.

Diese Werkzeugmaschine kann insbesondere mit der zuvor erläuterten Arbeitsplatte oder Teilen davon ausgestattet werden. Weiterhin ist zu verstehen, dass die erfindungsgemäße Arbeitsplatte mit dem Düseneinsatz insbesondere solcherart bevorzugt fortgebildet werden kann, dass sie diejenigen Fortbildungen der zuvor erläuterten Arbeitsplatte aufweist. Ferner ist die Werkzeugmaschine insbesondere derart fortgebildet, dass sie einen, zwei, mehrere oder sämtliche Bestandteile umfasst, welche für die Fortbildungen der zuvor erläuterten Arbeitsplatte notwendig sind. Hierfür umfasst die Werkzeugmaschine zumindest eine Druckluftquelle und/oder eine Vakuumquelle sowie einen Luftverteiler und/oder einen Vakuumverteiler.

Schließlich ist ein weiterer Aspekt der vorliegenden Erfindung ein Verfahren zur Reparatur einer Arbeitsplatte für einen Luftkissentisch, insbesondere der zuvor beschriebenen Art, umfassend zumindest einen lösbar eingesetzten und herausnehmbar befestigten Düseneinsatz, insbesondere einen Düseneinsatz der zuvor beschriebenen Art, mit den Schritten:
- Bereitstellen einer Arbeitsplatte mit einer oberen Auflagefläche und einer Vielzahl von Luftaustrittsöffnungen in der oberen Auflagefläche der Arbeitsplatte, wobei jede Luftaustrittsöffnung mit einem Luftaustrittskanal verbunden ist, welcher die Luftaustrittsöffnung mit einem unterhalb der oberen Auflagefläche angeordneten Luftverteiler verbindet, und in jedem Luftaustrittskanal ein Düseneinsatz angeordnet ist
- Einführen eines stabförmigen Werkzeugs in einen Düsenkanal des Düseneinsatzes,
- Aufbringen einer Hebelkraft auf den Düseneinsatz durch Verschwenken des in den Düsenkanal eingeführten stabförmigen Werkzeugs,
- Lösen einer Verrastung des Düseneinsatzes in dem Luftaustrittskanals,
- Entfernen des Düseneinsatzes aus dem Luftaustrittskanal,
- Einsetzen und Verrasten eines zweiten Düseneinsatzes in dem Luftaustrittskanal.

Dieses Verfahren kann insbesondere derart ausgeführt werden, dass die Arbeitsplatte ein, zwei, mehrere oder sämtliche Merkmale der Arbeitsplatte der vorstehend erläuterten Art aufweist und die zuvor erläuterten Fortbildungen der erfindungsgemäßen Arbeitsplatte ermöglicht. Die vorstehend genannten Verfahrensschritte dienen bevorzugt zur Herstellung einer Arbeitsplatte für einen Luftkissentisch. Die einzelnen Schritte können in beliebiger Reihenfolge durchgeführt werden oder sich zeitlich überlagern.

Im Folgenden werden bevorzugte Ausführungsformen der Erfindung anhand beiliegender Figuren erläutert. Es zeigen:
- Fig. 1: eine schematische Detailansicht einer beispielhaften Ausführungsform eines erfindungsgemäßen Düseneinsatzes;
- Fig. 2: ein schematischer Längsschnitt eines Luftaustrittskanals;
- Fig. 3: eine perspektivische Draufsicht auf eine erfindungsgemäße Arbeitsplatte mit einer Vielzahl von Luftaustrittsöffnungen und darin angeordneten Düseneinsätzen.

In den Figuren sind gleiche oder im Wesentlichen funktionsgleiche bzw. ähnliche Elemente mit den gleichen Bezugszeichen bezeichnet.

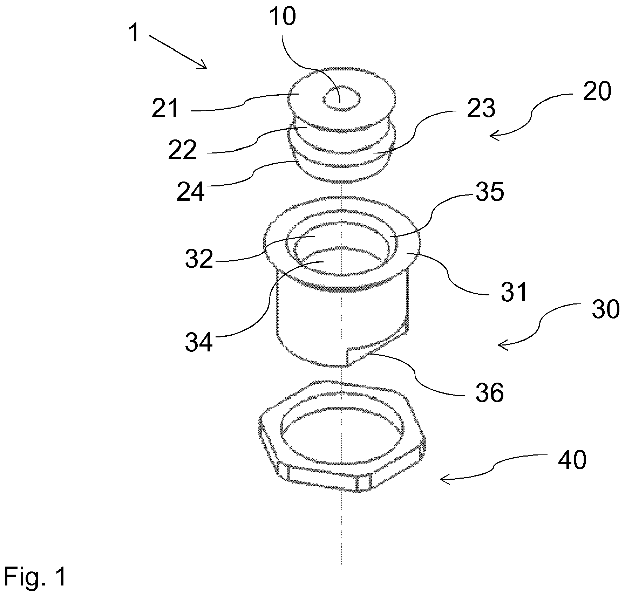

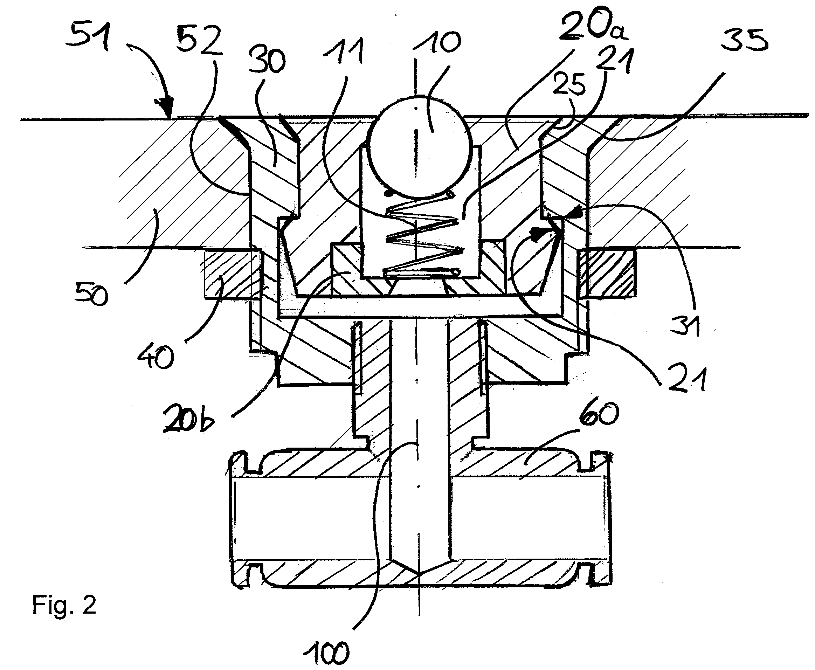

Der in Fig. 1 und Fig. 2 dargestellte Düseneinsatz 1 umfasst ein zweiteiliges Gehäuse 20a, b mit einem darin ausgebildeten Düsenkanal 21, der sich entlang einer Längsachse 100 erstreckt. In dem Düsenkanal ist eine Kugel 10 als Ventilkörper 10 eingesetzt. Die Kugel 10 wirkt mit einer oberen, zur Kugel 10 kongruent und sphärisch ausgeformten Ringfläche 22 zusammen, die eine Ventilsitzfläche darstellt. Eine Druckfeder 11 presst die Kugel 10 gegen die Ringfläche 22. Die Druckfeder stützt sich innerhalb des Düsenkanals am unteren Ende auf einem Absatz ab und ist daher, ebenso wie die Kugel, unverlierbar in dem Gehäuse angeordnet. Die beiden Gehäuseteile 20a, b können nach Anordnung von Kugel und Feder im Düsenkanal miteinander verpresst, verklebt oder verrastet werden. Das Gehäuse 20a,b mit der darin angeordneten Kugel 10 und Feder 11 stellt ein Austauschteil dar, das bei Defekt oder irreversibler Verschmutzung erfindungsgemäß leicht ausgetauscht werden kann.

Das Gehäuse 20 ist lösbar in einer Hülse 30 verrastet. Die Hülse 30 kann mittels einer Befestigungsmutter 40 in einem Luftaustrittskanal 52 einer Tischplatte 50 befestigt werden. Die Kugel 10 steht über eine obere Auflagefläche 51 der Tischplatte über. Wird auf der Tischplatte ein Werkstück abgelegt, so wird hierdurch die Kugel 10 gegen die Druckkraft der Feder 11 aus ihrer Anlage an der Ventilsitzfläche gedrückt, wodurch Luft durch den Düsenkanal strömen kann. Die solcherart strömende Luft trägt einerseits das Werkstück, andererseits die Kugel 10, welche hierdurch nach Art einer luftgelagerten Kugel ein leichtes horizontales Bewegen des Werkstücks auf der Auflagefläche ermöglicht.,

Die Hülse 30 weist an ihrer unteren Stirnfläche eine Durchgangsgewindebohrung auf, in welche ein Luftverteiler-T-Stück 60 eingeschraubt ist. Das Luftverteiler-T-Stück dient zum Anschluss einer Druckluftleitung und zur Weiterverteilung der Druckluft an ein anderes T- oder L-Stück, das Druckluft zu einem anderen Luftaustrittskanal zuführt. Die obere Stirnfläche des eingeschraubten Luftverteiler-T-Stücks 60 dient zugleich als Gegenfläche der Druckfeder 11.

Die Hülse 30 ist mittels einer konischen Anlagefläche 35 in der Tischplatte fluchtend zur Auflagefläche 51 abgestützt. Das Gehäuse 20 ist mittels einer konischen Anlagefläche 25 in der Hülse 30 fluchtend zur Auflagefläche 51 abgestützt. Die Auflagefläche 51, die obere Stirnfläche der Hülse 30 und die obere Stirnfläche des Gehäuses 20 bilden dadurch eine plane Ebene, aus der die Kugel 10 hervorsteht.

Das Gehäuse 20 ist rotationssymmetrisch ausgebildet. Mittels eines umlaufenden, außenumfänglichen Rastvorsprungs 21 an dem Gehäuse kann das Gehäuse an einem Hinterschnitts 31 in einem Aufnahmekanal der Hülse 30 lösbar in die Hülse 30 eingesetzt und darin herausnehmbar befestigt werden, indem das Gehäuse 20 in der Hülse 30 verrastet wird. Hierdurch kann die lösbare Verbindung mittels eines Stabelement, mit dem die Kugel 10 gegen die Kraft der Druckfeder 10 in den Düsenkanal 21 gedrückt wird und das dann in den Düsenkanal eingeführt wird, und einem Aufbringen einer Hebelkraft auf den Düseneinsatz durch Verschwenken des Stabelements um eine senkrecht zur Längsachse 100 ausgerichtete Hebelachse besonders leicht gelöst werden, ohne Elemente des Luftaustrittskanals zu beschädigen. Als Stabelement kann beispielsweise ein Schraubendreher oder ein Innensechskantschlüssel verwendet werden, was eine einfache Entfernung des Gehäuses 20 mit der darin angeordneten Kugel 10 ermöglicht. Das Gehäuse 20 kann auch derart in der Hülse 30 verrastet sein, dass es bei Heraushebeln aus der Hülse beschädigt wird. In diesem Fall ist ein Ersatz durch Einsetzen und verrasten eines neuen Gehäuses vorgesehen.

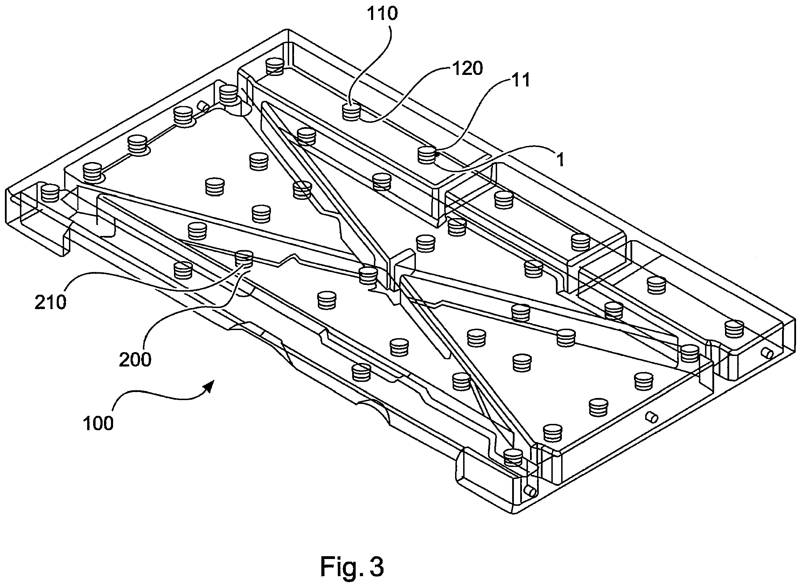

Fig.3 zeigt eine erfindungsgemäße Arbeitsplatte 100 für einen Luftkissentisch bzw. einen Vakuumtisch in einer perspektivischen Draufsicht. Die Arbeitsplatte weist zahlreiche Luftaustrittsöffnungen 110 auf, welche jeweils mittels eines Luftaustrittskanals 120 mit Öffnungen 210 von Kanälen des Luftverteilers 200 verbunden sind. In jedem Luftaustrittskanal 120 ist ein Düseneinsatz 1 mit einem Kugelrollenelement 11 eingesetzt und verrastet.

## Patentansprüche

1. Arbeitsplatte für einen Luftkissentisch umfassend
- eine obere Auflagefläche mit einer Vielzahl von Luftaustrittsöffnungen,
- eine Vielzahl von Luftaustrittskanälen, wobei jeder Luftaustrittskanal einen unterhalb der oberen Auflagefläche angeordneten Luftverteiler mit einer Luftaustrittsöffnung verbindet,
- eine Vielzahl von Düseneinsätzen, wobei jeder Düseneinsatz in dem Luftaustrittskanal angeordnet ist und jeder Düseneinsatz umfasst:
∘ einen Düsenkanal, der sich von einem Düseneingangsende zu einem Düsenausgangsende entlang einer Längsachse erstreckt und Luft in einer Strömungsrichtung aus dem Luftverteiler zur oberen Auflagefläche leitet,
∘ einen zumindest teilweise innerhalb des Düsenkanals beweglich gelagerten Ventilkörper, wobei der Ventilkörper
▪ in einer geschlossenen Stellung den Düsenkanal verschließt,
▪ ein Betätigungselement umfasst, das in der geschlossenen Stellung aus der oberen Auflagefläche hervorsteht und
▪ durch Beaufschlagen des Betätigungselements mit einer Öffnungskraft aus der geschlossenen Stellung in Richtung des Düseneingangsendes in eine offenen Stellung bewegbar ist,
**dadurch gekennzeichnet, dass** der Düseneinsatz in den Luftaustrittskanal lösbar eingesetzt und in Richtung der oberen Auflagefläche herausnehmbar in dem Luftaustrittskanal befestigt ist.

2. Arbeitsplatte nach Anspruch 1, **dadurch gekennzeichnet, dass** der Düseneinsatz in dem Luftaustrittskanal verrastet ist.

3. Arbeitsplatte nach einem der Ansprüche 1 oder 2, **dadurch gekennzeichnet, dass** der Düseneinsatz ein Gehäuse umfasst, wobei der Düsenkanal in dem Gehäuse angeordnet oder ausgebildet ist und das Gehäuse vorzugsweise ein Kunststoffelement ist.

4. Arbeitsplatte nach einem der vorstehenden Ansprüche, **dadurch gekennzeichnet, dass** der Düseneinsatz lösbar in eine in dem Luftaustrittskanal befestigte Hülse eingesetzt ist, wobei der Düseneinsatz aus der Hülse in Richtung der oberen Auflagefläche herausnehmbar befestigt ist, vorzugsweise verrastet ist und weiter vorzugsweise die Hülse aus einem Material ausgebildet ist, das eine höhere Festigkeit aufweist als das Material, aus dem der Düseneinsatz ausgebildet ist.

5. Arbeitsplatte nach Anspruch 4, **dadurch gekennzeichnet, dass** die Befestigung der Hülse in dem Luftaustrittskanal eine erste Haltekraft der Hülse innerhalb des Luftaustrittskanal in Richtung der Längsachse aufweist, die höher ist als eine zweite Haltekraft, die durch die Befestigung des Düseneinsatzes in der Hülse entlang der Längsachse erzeugt wird.

6. Arbeitsplatte nach einem der vorstehenden Ansprüche, **dadurch gekennzeichnet, dass** der Düseneinsatz ein Federelement umfasst, welches sich zumindest von dem Düseneingangsende bis zu dem Ventilkörper erstreckt, wobei
- das Federelement im Bereich des Düseneingangsendes abgestützt ist und
- der Ventilkörper auf dem Federelement angeordnet ist und
weiter **dadurch gekennzeichnet, dass** das Federelement eine Federkraft auf den Ventilkörper in Richtung der geschlossenen Stellung ausübt.

7. Arbeitsplatte nach einem der vorstehenden Ansprüche, **dadurch gekennzeichnet, dass** der Ventilkörper als ein Kugelrollenelement mit einem Kugeldurchmesser ausgebildet ist, wobei der Düsenkanal vorzugsweise einen Ventilsitzabschnitt mit einem inneren Durchmesser aufweist, welcher kleiner ist als der Kugeldurchmesser.

8. Arbeitsplatte nach Anspruch 7, **dadurch gekennzeichnet, dass** ein Teil des Kugelrollenelements in der offenen Stellung aus der oberen Auflagefläche hervorsteht.

9. Arbeitsplatte nach einem der vorstehenden Ansprüchen, **dadurch gekennzeichnet, dass** die Arbeitsplatte als Luftkissentisch oder als Vakuumtisch ausgebildet ist, wobei bei der Ausbildung als Vakuumtisch
- die Vielzahl von Luftaustrittsöffnungen als eine Vielzahl von Lufteintrittsöffnungen ausgebildet sind,
- der Luftverteiler als ein Vakuumverteiler ausgebildet ist und
- der Luftaustrittskanal als ein Vakuumleitungskanal ausgebildet ist und weiter **dadurch gekennzeichnet, dass** der Düsenkanal Luft in einer der Strömungsrichtung entgegengesetzten zweiten Strömungsrichtung von der oberen Auflagefläche in den Vakuumverteiler leitet.

10. Arbeitsplatte nach einem der vorstehenden Ansprüchen, **dadurch gekennzeichnet, dass** der Düseneinsatz ein Befestigungsmittel umfasst, das mit einem in dem Luftaustrittskanal ausgebildeten Befestigungsaufnahmemittel zusammenwirkt und eine lösbare Verbindung ausbildet und diese lösbare Verbindung durch Einführen eines Stabelements in den Düsenkanal und Aufbringen einer Hebelkraft auf den Düseneinsatz durch Verschwenken des Stabelements um eine senkrecht zur Längsachse ausgerichtete Hebelachse lösbar ist ohne die Befestigungsaufnahmemittel zu beschädigen.

11. Düseneinsatz zum Einsetzen und Befestigen in einem Luftaustrittskanal einer Arbeitsplatte, insbesondere nach einem der vorstehenden Ansprüche, umfassend
- zumindest einen Düsenkanal, der sich von einem Düseneingangsende zu einem Düsenausgangsende erstreckt und Luft in einer Strömungsrichtung von dem Düseneingangsende zum Düsenausgangsende leitet,
- einen im Wesentlichen innerhalb des Düsenkanals beweglich gelagerten Ventilkörper, wobei der Ventilkörper
∘ in einer geschlossenen Stellung den Düsenkanal im Bereich des Düsenausgangsendes verschließt,
∘ ein Betätigungselement umfasst, das in der geschlossenen Stellung aus dem Düsenausgangsende hervorsteht und
∘ durch Beaufschlagen des Betätigungselements mit einer Öffnungskraft, die in Richtung des Düsenausgangsendes wirkt, aus der geschlossenen Stellung in Richtung des Düseneingangsendes in eine offenen Stellung bewegbar ist,
**dadurch gekennzeichnet, dass** der Düseneinsatz ein Befestigungsmittel umfasst, das ausgebildet ist, um den Düseneinsatz lösbar in dem Luftaustrittskanal und in Richtung einer oberen Auflagefläche herausnehmbar zu befestigen, vorzugsweise zu verrasten.

12. Werkzeugmaschine mit einem Luftkissentisch zur verschieblichen Lagerung flächiger Werkstücke und/oder gegebenenfalls einem Vakuumtisch zur Fixierung flächiger Werkstücke umfassend eine Arbeitsplatte nach einem der Ansprüche 1 bis 10.

13. Verfahren zur Reparatur einer Arbeitsplatte für einen Luftkissentisch, insbesondere nach einem der Ansprüche 1 bis 10, umfassend zumindest einen lösbar eingesetzten und herausnehmbar befestigten Düseneinsatz, insbesondere einen Düseneinsatz nach Anspruch 11, mit den Schritten:
- Bereitstellen einer Arbeitsplatte mit einer oberen Auflagefläche und einer Vielzahl von Luftaustrittsöffnungen in der oberen Auflagefläche der Arbeitsplatte, wobei jede Luftaustrittsöffnung mit einem Luftaustrittskanal verbunden ist, welcher die Luftaustrittsöffnung mit einem unterhalb der oberen Auflagefläche angeordneten Luftverteiler verbindet, und in jedem Luftaustrittskanal ein Düseneinsatz angeordnet ist
- Einführen eines stabförmigen Werkzeugs in einen Düsenkanal des Düseneinsatzes,
- Aufbringen einer Hebelkraft auf den Düseneinsatz durch Verschwenken des in den Düsenkanal eingeführten stabförmigen Werkzeugs,
- Lösen einer Verrastung des Düseneinsatzes in dem Luftaustrittskanals,
- Entfernen des Düseneinsatzes aus dem Luftaustrittskanal,
- Einsetzen und Verrasten eines zweiten Düseneinsatzes in dem Luftaustrittskanal.
